# DEMANDE DE BREVET EUROPEEN

(11) **EP 2 650 269 A2**
(43) Date de publication de la demande: **16.10.2013**
(21) Numéro de dépôt: 13160390.4
(22) Date de dépôt: 21.03.2013
(51) Int. Cl.: C04B 28/10, E04F 13/02, C04B 28/02

(54) **Enduit de protection à base de terre**

(30) Priorité: 29.03.2012 FR 1252824
(71) Demandeur: Cematerre, 76430 Oudalle (FR)
(72) Inventeur: Lefebvre, Alain, 76430 Oudalle (FR)
(74) Mandataire: Kohn, Philippe

(57) **Abrégé**

L'invention propose un enduit de revêtement d'un mur vertical, notamment enduit intérieur ou extérieur comportant du ciment, caractérisé en ce qu'il comporte au moins un mélange comprenant :
- de l'eau douce (25),
- de la terre naturelle (12), dans une proportion massique de 70 à 98%,
- de la chaux vive (14), obtenue par thermolyse du calcaire, principalement constituée d'oxyde de calcium (CaO), dans une proportion massique de 1 à 10%
- du ciment (22) et/ou de la chaux artificielle (20), dans une proportion massique de 1 à 15%,

auquel sont adjointes des fibres (16) pleines de longueurs comprises entre 1 et 10 cm, dans une proportion de 0.1 à 20 kg par m³ de mélange.

## Description

L'invention concerne un enduit de revêtement pour un mur vertical, notamment un enduit intérieur ou extérieur comportant du ciment.

L'utilisation d'enduit pour le revêtement intérieur ou extérieur de murs verticaux est connue de longue date.

Un des plus anciens types d'enduit, utilisé encore de nos jours dans certains pays méditerranéens, consiste à utiliser de la terre crue mêlée de chaux et éventuellement de paille pour recouvrir les murs.

L'inconvénient de cette conception est qu'elle ne peut qu'être réservée à des pays chauds. En effet, toute terre contient de l'argile qui ne peut être stabilisé que par un traitement à la chaux vive, qui, pour mémoire, résulte de la calcination de la chaux ordinaire.

En l'absence de chaux vive, l'argile contenue dans la terre d'un tel mélange ne peut être stabilisé. Un tel enduit est donc vulnérable aux pluies qui peuvent dissoudre l'argile.

Au contraire, l'utilisation de chaux vive permet de réduire la quantité d'argile présente dans la terre, tout comme elle contribue à réduire l'humidité de l'enduit.

Par ailleurs, dans un enduit conventionnel, l'utilisation de la paille en tant que liant ne permet d'obtenir qu'un médiocre renforcement de l'enduit auquel elle est mélangé, et ne permet de plus d'obtenir qu'un aspect grossier, incompatible avec un niveau de finition élevé.

En effet, la paille se présente en effet sous un aspect tubulaire, et à ce titre, outre qu'elle est particulièrement cassante, elle est de surcroît éminemment inesthétique.

L'invention remédie à ces inconvénients en proposant un nouveau matériau d'enduit à base de terre, comportant des adjuvants permettant d'accroître ses performances.

Dans ce but, l'invention propose un enduit du type décrit précédemment, **caractérisé en ce qu'il** comporte au moins un mélange comprenant :
- de l'eau douce,
- de la terre naturelle, dans une proportion massique de 70 à 98%,
- de la chaux vive, obtenue par thermolyse du calcaire, principalement constituée d'oxyde de calcium (CaO), dans une proportion massique de 1 à 10%,
- du ciment et/ou de la chaux artificielle, dans une proportion massique de 1 à 25%,
auquel sont adjointes des fibres pleines de longueurs comprises entre 1 et 10 cm, dans une proportion de 0.1 à 20 kg par m³ de mélange.

Selon d'autres caractéristiques de l'enduit :
- la terre naturelle est de la terre argileuse,
- la terre naturelle est de la terre sablonneuse,
- les fibres sont des fibres pleines naturelles, notamment de lin ou de coton,
- les fibres sont des fibres pleines synthétiques, notamment de polypropylène,
- l'enduit de revêtement comporte de surcroît un adjuvant, notamment un plastifiant, un fluidifiant, un hydrofuge, ou un fongicide,
- l'enduit de revêtement est préparé selon un taux d'humidité de 5 à 35%, pour permettre à l'air de se substituer à l'eau du mélange lors de son évaporation, afin de conférer une capacité d'isolation thermique élevée à l'enduit une fois que ledit enduit est sec.

L'invention propose aussi un procédé de fabrication d'un enduit de revêtement comporte au moins un mélange comprenant au moins :
- de l'eau douce,
- de la terre naturelle, dans une proportion massique de 70 à 98%, notamment de la terre de limon et/ou sablonneuse,
- de la chaux vive, obtenue par thermolyse du calcaire, principalement constituée d'oxyde de calcium (CaO), dans une proportion massique de 1 à 10%
- du ciment et/ou de la chaux artificielle, dans une proportion massique de 1 à 25%,
auquel sont adjointes des fibres, notamment naturelles ou synthétiques de longueurs comprises entre 1 et 10 cm, dans une proportion de 0.1 à 20 kg par m³ de mélange,
**caractérisé en ce qu'il** comporte une première étape de mélange au cours de laquelle on réalise un mélange comprenant au moins la terre naturelle, la chaux vive et les fibres selon un taux d'humidité ou hygrométrie naturelle de 10 à 20%, le ciment et/ou la chaux artificielle étant maintenu séparément à l'abri de l'humidité, puis une seconde étape finale intervenant immédiatement avant utilisation de l'enduit, au cours de laquelle on ajoute le ciment et/ou la chaux artificielle et l'eau audit mélange.

Selon d'autres caractéristiques du procédé de fabrication :
- au cours de la première étape ou bien de la seconde étape, on incorpore de surcroît dans le mélange un adjuvant, notamment un plastifiant, un fluidifiant, un hydrofuge, ou un fongicide.

L'invention propose aussi un procédé d'application sur un support d'un enduit de revêtement du type décrit précédemment, **caractérisé en ce qu'il** comporte au moins une étape au cours de laquelle on étale manuellement l'enduit sur le support.

En variante, l'invention propose aussi un procédé d'application sur un support d'un enduit de revêtement du type décrit précédemment, **caractérisé en ce qu'il** comporte au moins une étape de pompage de l'enduit au travers d'un conduit et au moins une étape de projection sous pression de l'enduit sortant dudit conduit sur le support.

D'autres caractéristiques et avantages de l'invention apparaîtront à la lecture de la description détaillée qui suit pour la compréhension de laquelle on se reportera aux dessins annexés dans lesquels :
- la figure 1 représente la première étape de fabrication de l'enduit selon l'invention,
- la figure 2 représente une étape intermédiaire de stockage et/ou de transport de l'enduit selon l'invention,
- la figure 3 représente la seconde étape de fabrication de l'enduit selon l'invention,
- la figure 4 représente une première étape d'un procédé préféré d'application de l'enduit selon l'invention,
- la figure 5 représente une seconde étape d'un procédé préféré d'application de l'enduit selon l'invention.

Dans la description qui va suivre, des chiffres de référence identiques désignent des pièces identiques ou ayant des fonctions similaires.

On a représenté sur la figure la première étape de fabrication d'un enduit selon l'invention.

L'enduit selon l'invention est notamment un enduit intérieur ou extérieur et il comporte au moins un mélange comprenant :
- de l'eau douce,
- de la terre naturelle, dans une proportion massique de 70 à 98%,
- de la chaux vive, obtenue par thermolyse du calcaire, principalement constituée d'oxyde de calcium (CaO), dans une proportion massique de 1 à 10%,
- du ciment et/ou de la chaux artificielle, dans une proportion massique de 1 à 25%,
auquel sont adjointes des fibres pleines de longueurs comprises entre 1 et 10 cm, dans une proportion de 0.1 à 20 kg par m³ de mélange.

Plus particulièrement, la terre naturelle peut être de la terre argileuse ou de la terre naturelle de la terre sablonneuse, ou encore un mélange de ces deux types de terre.

Les fibres sont des fibres pleines, c'est-à-dire qu'elles présentent une structure dépourvue de cavité. A ce titre, elles présentent une résistance bien supérieure à des éléments tubulaires, synthétiques ou naturels comme la paille.

Les fibres sont typiquement du type de celles couramment employées dans l'industrie textile ou dans le bâtiment. Il peut s'agir de fibres naturelles, notamment de lin ou de coton, ou des fibres pleines synthétiques, notamment de polypropylène.

Le ciment est de préférence un ciment à prise normale disponible dans le commerce.

La chaux artificielle, par définition, comporte essentiellement de l'oxyde de calcium et de magnésium (CaO, MgO) et/ou de l'hydroxyde de calcium et de magnésium (Ca(OH)2, Mg(OH)2). Lorsqu'elle est utilisée dans le mélange, la chaux artificielle peut être ajoutée en remplacement partiel ou total du ciment.

A ce mélange comportant les constituants essentiels de l'enduit selon l'invention peuvent être ajoutés différents adjuvants.

Ainsi, le mélange peut comporter de surcroît un plastifiant, notamment un plastifiant constitué d'un polymère acrylique sous forme liquide.

Le mélange peut aussi comporter de surcroît un autre adjuvant, tel qu'un fluidifiant, un hydrofuge, ou un fongicide.

De préférence, l'enduit de revêtement avant utilisation doit présenter un taux d'humidité de 5 à 35%, pour permettre à l'air de se substituer à l'eau du mélange lors de son évaporation, afin de conférer une capacité d'isolation thermique élevée à l'enduit une fois que ledit enduit est sec.

L'enduit ainsi obtenu présente les avantages externes d'un mélange terreux traditionnel, tel que le "pisé", car la base de terre naturelle qui est utilisée permet une bonne respiration du matériau une fois que ledit matériau s'est solidifié. De ce fait, le matériau présente aussi des caractéristiques élevées d'isolation thermique et phonique. Il est de plus particulièrement efficace dans sa capacité à jouer un rôle de coupe-feu.

Le matériau ainsi obtenu est toutefois beaucoup plus résistant qu'un enduit ordinaire, car la présence de chaux vive permet d'absorber l'humidité du matériau et car les fibres et le ciment permettent de renforcer la cohésion du matériau.

L'enduit peut être réalisé immédiatement avant son utilisation.

Toutefois, selon un procédé préférentiel de l'invention l'enduit est réalisé en deux étapes, à savoir une première étape à l'issue de laquelle le mélange peut être ensaché pour son transport et/ou son stockage et une seconde étape au cours de laquelle le mélange est finalisé préalablement à son utilisation.

Ainsi, le procédé de fabrication de l'enduit selon l'invention comporte une première étape de mélange au cours de laquelle on réalise un mélange comprenant au moins la terre naturelle, la chaux vive, et les fibres selon un taux d'humidité ou hygrométrie naturelle de 10 à 20%.

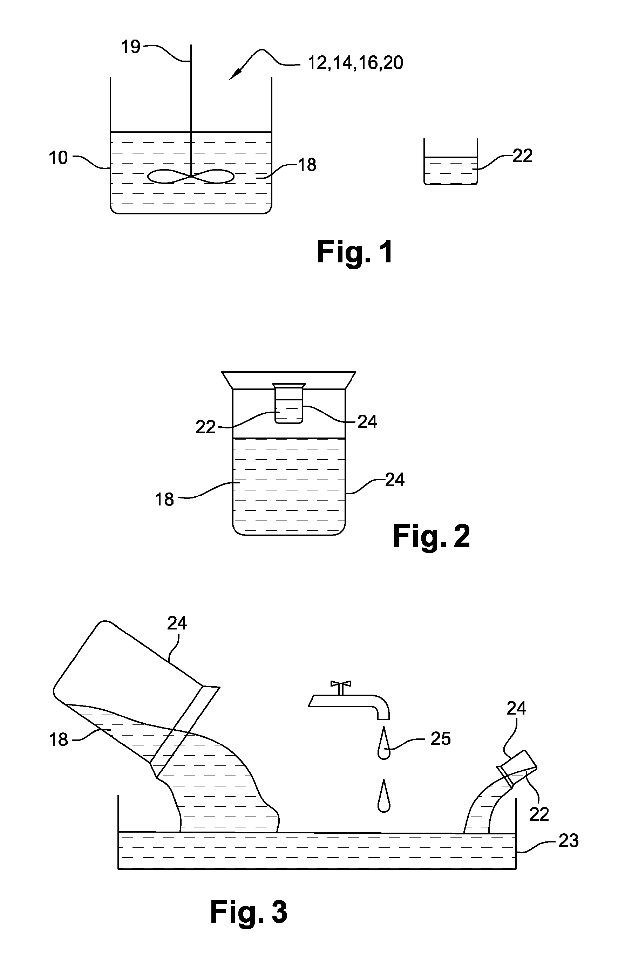

Comme l'illustre la figure 1, dans le cadre d'une réalisation industrielle on mélange en usine dans un malaxeur 10 comportant un organe mélangeur 19 de mélange :
- de la terre naturelle 12, dans une proportion massique de 70 à 98%,
- de la chaux vive 14, obtenue par thermolyse du calcaire, principalement constituée d'oxyde de calcium (CaO), dans une proportion massique de 1 à 10%
- des fibres 16 pleines de longueurs comprises entre 1 et 10 cm, dans une proportion de 0.1 à 20 kg par m³ de mélange.

On peut à ce moment adjoindre au mélange 18 ainsi obtenu un ou plusieurs des adjuvants 21 tels que plastifiant, fluidifiant, ou hydrofuge.

Cette possibilité n'est toutefois pas limitative de l'invention et ces adjuvants peuvent rajoutés ultérieurement immédiatement avant l'utilisation de l'enduit, comme on le verra ultérieurement.

La chaux artificielle 20 et/ou le ciment 22, dosés à part dans une proportion massique de 1 à 25% du mélange, sont quant à eux maintenu séparément à l'abri de l'humidité.

Comme l'illustre la figure 2, on ensache alors le mélange 18 dans un sac 24, la chaux artificielle 20 et/ou le ciment 22 dans au moins un sachet 26, qui peut être placé à l'extérieur ou à l'intérieur du sac 24, la dose de chaux artificielle 20 et/ou de ciment 22 correspondant à la dose de mélange 18.

Le sac 24 et le sachet 26 peuvent alors être stockés ou transportés l'un dans l'autre ou séparément.

Puis intervient une seconde étape finale, précédant immédiatement avant utilisation de l'enduit, au cours de laquelle on ouvre le sac 24 et le sachet, 26 en mélangeant leurs contenus.

Ainsi on mélange par exemple dans un bac 23, le mélange 18 provenant du sac 24 avec la chaux artificielle 20 et/ou le ciment 22 provenant du sachet 26. On y incorpore éventuellement de l'eau 25 pour parvenir à un mélange 18 final présentant un taux final d'humidité de 5 à 35%.

On peut aussi, si le mélange n'a pas été fait au cours de la première étape, y ajouter les adjuvants 21 tels que plastifiant, fluidifiant, ou hydrofuge.

Selon l'invention, un premier procédé d'application (non représenté) de l'enduit sur un support tel qu'un mur comporte au moins une étape au cours de laquelle on étale manuellement l'enduit sur le support, par exemple avec une taloche et une truelle.

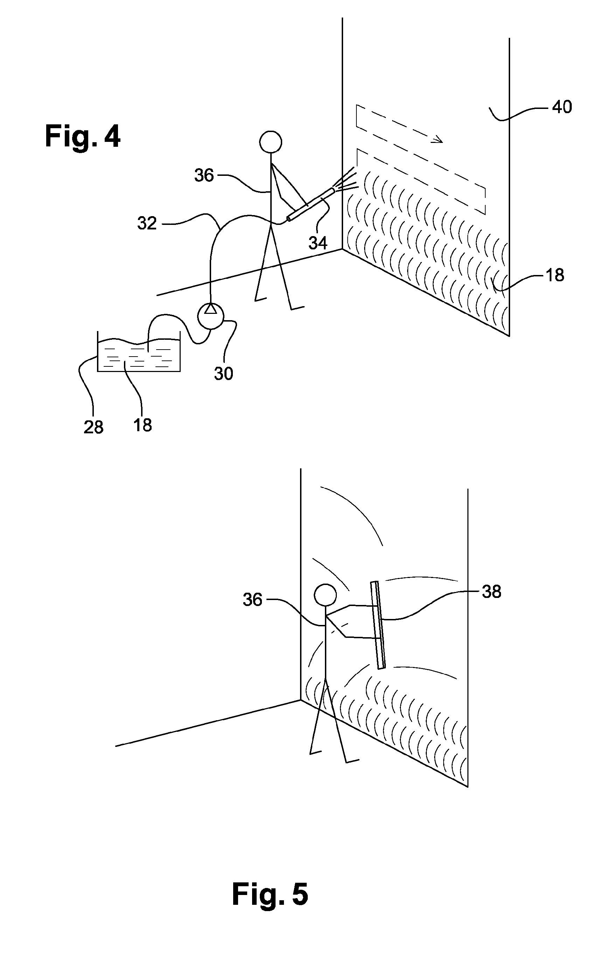

La figure 4 illustre, en variante, une première étape d'un second procédé préféré d'application (non représenté) de l'enduit sur un support tel qu'un mur.

Comme l'illustre la figure 4, ce second procédé préféré comporte au moins une étape de pompage du mélange 18 d'enduit au travers d'un conduit 30 et au moins une étape de projection sous pression de l'enduit sortant dudit conduit 30 sur le support 40.

Ainsi par exemple on dispose l'enduit 18 préalablement dans une cuve 28. L'enduit est aspiré par une pompe 30 et pompé dans un conduit 32 qui se termine par une lance 34 tenue par un opérateur 36, qui projette ainsi le mélange 18 sur un mur 40.

Puis, comme l'illustre la figure 5, l'opérateur 36 lisse l'enduit avec une lisseuse 38 et l'enduit est mis à sécher.

Il sera compris que l'enduit peut aussi être brumisé sur le mur ou projeté à la manière d'un crépi.

Il sera aussi compris que l'enduit n'est pas nécessairement lissé. Il peut en effet être mis en séchage sans lissage afin de lui conserver un aspect irrégulier.

Les murs ainsi recouverts de l'enduit selon invention présentent des qualités élevées de résistance tout en permettant une certaine aération des habitations, de par leurs qualités respirantes et isolantes.

## Revendications

1. Enduit de revêtement d'un mur vertical, notamment enduit intérieur ou extérieur comportant du ciment,
**caractérisé en ce qu'il** comporte au moins un mélange (18) comprenant :
- de l'eau douce (25),
- de la terre naturelle (12), dans une proportion massique de 70 à 98%,
- de la chaux vive (14), obtenue par thermolyse du calcaire, principalement constituée d'oxyde de calcium (CaO), dans une proportion massique de 1 à 10%,
- du ciment (22) ou de la chaux artificielle, (20) dans une proportion massique de 1 à 15%,
auquel sont adjointes des fibres (16) pleines de longueurs comprises entre 1 et 10 cm, dans une proportion de 0.1 à 20 kg par m³ de mélange.

2. Enduit de revêtement selon la revendication 1, **caractérisé en ce que** la terre naturelle (12) est de la terre argileuse.

3. Enduit de revêtement selon la revendication 1, **caractérisé en ce que** la terre naturelle (12) est de la terre sablonneuse.

4. Enduit de revêtement selon la revendication 1, **caractérisé en ce que** les fibres (16) sont des fibres pleines naturelles, notamment de lin ou de coton.

5. Enduit de revêtement selon la revendication 1, **caractérisé en ce que** les fibres (16) sont des fibres pleines synthétiques, notamment de polypropylène.

6. Enduit de revêtement selon la revendication 1, **caractérisé en ce que** le mélange comporte de surcroît un adjuvant (21), notamment un plastifiant, un fluidifiant, un hydrofuge, ou un fongicide.

7. Enduit de revêtement, **caractérisé en ce que** le mélange est préparé selon un taux d'humidité de 5 à 35% pour permettre à l'air de se substituer à l'eau du mélange lors de son évaporation, afin de conférer une capacité d'isolation thermique élevée à l'enduit une fois que ledit enduit est sec.

8. Procédé de fabrication d'un enduit de revêtement comporte au moins un mélange comprenant au moins :
- de l'eau douce (25),
- de la terre naturelle (12), dans une proportion massique de 70 à 98%, notamment de la terre de limon et/ou sablonneuse,
- de la chaux vive (14), obtenue par thermolyse du calcaire, principalement constituée d'oxyde de calcium (CaO), dans une proportion massique de 1 à 10%,
- du ciment (22) et/ou de la chaux artificielle, dans une proportion massique de 1 à 15%,
auquel sont adjointes des fibres (16), notamment naturelles ou synthétiques de longueurs comprises entre 1 et 10 cm, dans une proportion de 0.1 à 20 kg par m³ de mélange,
**caractérisé en ce qu'il** comporte une première étape de mélange au cours de laquelle on réalise un mélange (18) comprenant au moins la terre naturelle (12), la chaux vive (14) et les fibres (16) selon un taux d'humidité ou hygrométrie naturelle de 10 à 20%, le ciment (22) étant maintenu séparément à l'abri de l'humidité, puis une seconde étape finale intervenant immédiatement avant utilisation de l'enduit, au cours de laquelle on ajoute le ciment (22) et l'eau (25) audit mélange (18).

9. Procédé de fabrication selon la revendication précédente, **caractérisé en ce qu'**au cours de la première étape ou bien de la seconde étape, on incorpore de surcroît dans le mélange (18) un adjuvant (21), notamment un plastifiant, un fluidifiant, un hydrofuge, ou un fongicide.

10. Procédé d'application sur un support d'un enduit de revêtement selon l'une des revendications 1 à 7, **caractérisé en ce qu'il** comporte au moins une étape au cours de laquelle on étale manuellement l'enduit sur le support.

11. Procédé d'application sur un support d'un enduit de revêtement selon l'une des revendications 1 à 7, **caractérisé en ce qu'il** comporte au moins une étape de pompage de l'enduit au travers d'un conduit (32) et au moins une étape de projection de l'enduit sortant dudit conduit (32) sur le support (40).
